# EUROPÄISCHE PATENTSCHRIFT

(11) **EP 2 609 319 B1**
(45) Veröffentlichungstag und Bekanntmachung des Hinweises auf die Patenterteilung: **13.04.2016**
(21) Anmeldenummer: 11739062.5
(22) Anmeldetag: 03.08.2011
(51) Int. Cl.: F02M 26/00, F01L 3/08

(54) **ABGASRÜCKFÜHRVENTIL FÜR EINE VERBRENNUNGSKRAFTMASCHINE**
EXHAUST GAS RECIRCULATING VALVE FOR AN INTERNAL COMBUSTION ENGINE
SOUPAPE DE RECYCLAGE DE GAZ D'ÉCHAPPEMENT POUR UN MOTEUR À COMBUSTION INTERNE

(30) Priorität: 26.08.2010 DE 102010035622
(43) Veröffentlichungstag der Anmeldung: 03.07.2013
(73) Patentinhaber: Pierburg GmbH, 41460 Neuss (DE)
(72) Erfinder: VITT, Stefan, 41516 Grevenbroich (DE); SARI, Osman, 41516 Grevenbroich (DE); DIETZ, Gerard, 47569 Römmerskirchen (DE)
(74) Vertreter: Patentanwälte ter Smitten Eberlein Rütten Partnerschaftsgesellschaft
(86) Internationale Anmeldenummer: PCT/EP2011/063353
(87) Internationale Veröffentlichungsnummer: WO 2012/025351

(56) Entgegenhaltungen:
- EP-A1- 1 683 945
- EP-A2- 1 605 155
- DE-A1-102005 035 034
- US-A1- 2002 185 624
- US-A1- 2004 041 115
- US-A1- 2004 065 860

## Beschreibung

Die Erfindung betrifft ein Abgasrückführventil für eine Verbrennungskraftmaschine mit einem Gehäuse mit einem Abgaseinlass und einem Abgasauslass, einem Ventilschließkörper, einer Ventilstange, an der der Ventilschließkörper befestigt ist und welche über einen Aktuator bewegbar ist, einem Ventilsitz zwischen dem Abgaseinlass und dem Abgasauslass, auf den der Ventilschließkörper durch Bewegung der Ventilstange absenkbar ist und von dem der Ventilschließkörper durch entgegengesetzte Bewegung abhebbar ist, einer Führungsbuchse, über welche die Ventilstange im Gehäuse geführt ist und einem Dichtring, welcher am zum Ventilschließkörper entgegengesetzten Ende der Führungsbuchse angeordnet ist.

Abgasrückführventile zum Rückführen von an den jeweiligen Betriebszustand der Brennkraftmaschine angepassten Abgasmengen zur Reduzierung der umweltschädlichen Anteile, insbesondere Stickoxyde im Abgas einer Verbrennungskraftmaschine sind allgemein bekannt und werden in einer Vielzahl von Anmeldungen beschrieben. Die Abgasrückführventile bestehen in der Regel aus einem Aktuator, der in Wirkverbindung mit einer Ventilstange steht, die über eine Führungsbuchse in einem Gehäuse des Ventils geführt wird und an ihrem dem Aktuator entgegengesetzten Ende zumindest einen Ventilschließkörper aufweist, der mit einem entsprechendem Ventilsitz korrespondiert. Die meisten Abgasrückführventile sind dabei so ausgeführt, dass die Führungsbuchse im geschlossenen Zustand des Ventils in dem Frischluft enthaltenden Bereich angeordnet ist und von der Abgasseite durch den Ventilschließkörper getrennt ist. Bei einem Öffnen des Ventils also einem Abheben des Ventilschließkörpers vom Ventilsitz strömt jedoch Abgas in Richtung des Saugrohres, so dass eine Verbindung des rußhaltigen oder anderweitig durch anbackende und klebende Substanzen belasteten Abgases zur Führungsbuchse entsteht, wodurch sich nicht zuletzt aufgrund der Temperaturunterschiede Ablagerungen an der Ventilstange beziehungsweise in der Führungsbuchse bilden, die die Funktion des Ventils beeinträchtigen können.

Zur Vermeidung solcher Ablagerungen an der Ventilstange beziehungsweise im Führungskörper, aber auch zur Verhinderung von Funktionsstörungen an elektrischen Bauteilen im Bereich des Aktuators, wie Elektromagneten, Elektromotoren oder Potentiometern durch Abgasbestandteile wurden verschiedene Vorschläge gemacht.

Zur Vermeidung eines Eintritts der Schmutzstoffe in den Bereich des Aktuators ist beispielsweise aus der DE 103 36 976 eine Ventilstangenabdichtung durch einen Radialdichtring bekannt. Dieser verschleißt jedoch schon nach kurzer Laufzeit, und verliert so seine dichtende Funktion, da Ablagerungen zwischen Führungsbuchse und Ventilstange im an den Dichtring angrenzenden Bereich zu einer Riefenbildung an der Ventilstange führen. Diese gegebenenfalls scharfen Kanten werden am Dichtring entlang geführt und können an diesem wiederum zu kleinen Rissen führen. Neben einer Undichtigkeit kann hierdurch auch ein Verklemmen des Ventils die Folge sein.

Eine andere Form der Abdichtung wird in der DE 43 38 192 A1 vorgeschlagen. Bei dem hierin offenbarten Ventil ist im Bereich der Reingasseite eine Rippe angeordnet, die den Führungskörper vor Wärmestrahlung und Verschmutzung schützen soll. Zusätzlich ist die Ventilstange mit einer elastischen Membran verbunden, die die Stellkammer gegenüber dem Abgasauslass abdichten soll. Eine solche Ausführung ist jedoch vom Aufbau her sehr aufwendig, da zur Abdichtung des Ventilkörpers mehrere zusätzliche Bauteile verwendet werden müssen. Insbesondere erfordert die Anordnung der abdichtenden Membran zusätzlichen Montageaufwand und die Herstellung eines Gehäuses mit Rippe im Vergleich zu einem Gehäuse ohne Rippe höhere Kosten. Des Weiteren sammeln sich im Bereich zwischen der Führungsbuchse und Ventilstange Ablagerungen, die zu einem Verklemmen des Ventils führen.

Auch ist aus der EP 1 683 945 A1 ein Auslassventil eines Verbrennungsmotors bekannt, welches über einen Kipphebel betätigt wird. Dies hat zur Folge, dass radiale Kräfte auf die Ventilstange wirken, die diese auf die Ventilführungsbuchse überträgt. Am zum Aktor weisenden Ende der Führungsbuchse ist an der Führungsbuchse eine Dichtung angeordnet, die über eine Nut am Außenumfang der Führungsbuchse befestigt wird. Um zu vermeiden, dass die auf die Ventilstange wirkende Radialkraft in einem Bereich auf die Ventilführung übertragen wird, der durch Nuten oder Einschnürungen geschwächt ist, wird ein radial innerer Spalt an der Ventilführung ausgebildet, der unmittelbar unterhalb der radial äußeren Nut endet. Eine Beschädigung des Dichtrings wird durch diesen Spalt jedoch nicht ausgeschlossen.

Entsprechend besteht bei den bekannten Ausführungen der Nachteil, dass zwischen Führungsbuchse und Ventilstange eindringende Schmutzpartikel zu Funktionsstörungen des Ventils durch eine Grat- und Riefenbildung an der Ventilstange oder durch die Ablagerungen selbst führen. Hierdurch kann auch die Abschirmung des Aktuators von Schmutzpartikeln gestört werden, wodurch Störungen der elektrischen Bauteile folgen.

Es stellt sich daher die Aufgabe, ein Abgasrückführventil bereit zu stellen, bei dem bei geringem Montageaufwand eine lange Lebensdauer ohne Funktionsstörungen des Ventils sichergestellt wird. Beschädigungen an Abdichtelementen sollen ebenso verhindert werden, wie ein Verklemmen durch Ablagerungen oder Riefen an der Ventilstange.

Diese Aufgabe wird durch ein Abgasrückführventil mit den Merkmalen des Hauptanspruchs gelöst. Dadurch, dass in einem ersten Abschnitt der Führungsbuchse, der zum Dichtring weist, zwischen der Ventilstange und der Führungsbuchse ein umlaufender Spalt ausgebildet ist, dessen Höhe größer oder gleich der Hubhöhe des Ventilschließkörpers ist, wird erreicht, dass in diesem Bereich keine Reibung zwischen Ventilstange und Führungsbuchse auftritt. Hierdurch entstehen in diesem Bereich auch keine Riefen, die zu einer Zerstörung des Radialdichtrings führen könnten. Es wird ausgeschlossen, dass der im Führungsbereich der Führungsbuchse gleitende Abschnitt, in dem sich Riefen und Kanten durch die direkte gleitende Bewegung aufeinander bilden können, in Kontakt zum Dichtring beim Schließen des Ventils kommen kann. Hierdurch wird die Dichtigkeit und Lebensdauer des Dichtringes erhöht.

In einer weiterführenden Ausführung grenzt an den ersten Abschnitt ein Führungsabschnitt der Führungsbuchse an, dessen zum Ventilschließkörper weisendes Ende scharfkantig ausgebildet ist. Diese scharfe Kante dient als Schabekante, an der Ablagerungen der Ventilstange beim Schließen des Ventils abgeschert werde, wodurch ein Eindringen von Verschmutzungen in den relativ kurzen Gleitbereich weitestgehend vermieden wird.

Vorteilhafterweise grenzt an den Führungsabschnitt in Richtung zum Ventilschließkörper ein dritter Abschnitt an, in dem ein zweiter Spalt zwischen der Führungsbuchse und der Ventilstange ausgebildet ist, wobei am zum Ventilschließkörper weisenden Ende die Führungsbuchse eine Einschnürung aufweist, durch die der zweite Spalt reduziert wird. In diesem Spalt können sich Verschmutzungen sammeln, ohne dass diese im Gleitbereich zu Reibungen führen, durch die Riefen an der Stange oder in der Führungsbuchse entstehen. Zusätzlich dient dieser Abschnitt, der in den Abgas durchströmten Raum ragt, als Abschirmung für die Ventilstange.

In einer weiteren vorteilhaften Ausgestaltung weist der Führungsabschnitt an seinen axialen Enden zwei Führungsbereiche auf, zwischen denen ein weiterer Spalt ausgebildet ist. Hierdurch wird der Gleitbereich, in dem Reibungen entstehen können deutlich reduziert und ein zusätzlicher Raum zum Auffangen der Ablagerungen geschaffen. Durch die zwei Führungsbereiche wird eine saubere Führung der Ventilstange dennoch sichergestellt. Die Führungsbereiche werden zur Vermeidung größerer Reibungsflächen vorzugsweise kurz ausgeführt. Verklemmungen können leichter gelöst werden.

Vorzugsweise ist die axiale Höhe der beiden Führungsabschnitte kleiner oder gleich der maximalen Hubhöhe des Ventilschließkörpers ist, wodurch im Führungsbereich vorhandene Verunreinigungen jeweils in einen Bereich außerhalb des Führungsbereiches bei Betätigung des Ventils transportiert werden kann.

In einer hierzu wiederum weiterführenden Ausführungsform sind die beiden Führungsbereiche an zumindest einem ihrer axialen Enden scharfkantig ausgebildet. Diese Kanten dienen als Schabekanten, über die Verunreinigungen bei Bewegung der Ventilstange von dieser abgeschert werden, wodurch ein Eindringen in den Gleitbereich weitestgehend verhindert wird. Dies führt wiederum zu verringerter Reibung und der Vermeidung von Riefen.

Vorzugsweise ist an der Ventilstange ein umlaufender Einstich ausgebildet, der im geschlossenen Zustand des Abgasrückführventils unmittelbar an den Führungsabschnitt angrenzt oder eine kurze Überschneidung mit dem Führungsabschnitt aufweist. Auch dieser Abschnitt der Ventilstange dient zum Aufnehmen von abgescherten Verunreinigungen und somit zur Verhinderung von Schäden durch Reibung mit zwischenliegenden Partikeln.

Es wird somit ein Abgasrückführventil geschaffen, mit dem Funktionsstörungen des Ventils minimiert werden, indem eine langlebige Dichtigkeit entlang der Ventilstange sichergestellt wird und Verunreinigungen im reibungsbehafteten Führungsbereich weitestgehend vermieden werden, wodurch auch ein Verklemmen des Abgasrückführventils verhindert wird.

Zwei Ausführungsbeispiele erfindungsgemäßer Abgasrückführventile sind in den Figuren dargestellt und werden nachfolgend beschrieben.
Figur 1 zeigt eine Seitenansicht eines Ausschnitts eines ersten Ausführungsbeispiels eines erfindungsgemäßen Abgasrückführventils in geschnittener Darstellung.
Figur 2 zeigt eine Seitenansicht eines Ausschnitts eines zweiten Ausführungsbeispiels eines erfindungsgemäßen Abgasrückführventils in geschnittener Darstellung.

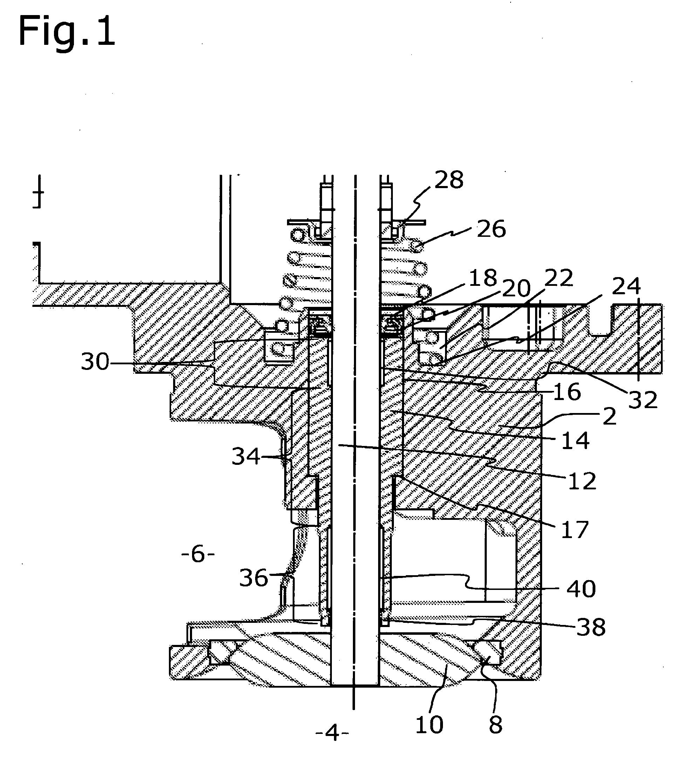

Das in Figur 1 dargestellte Abgasrückführventil ist als Steckventil ausgeführt, welches in eine entsprechend ausgeführte Öffnung eines Abgasrückführkanals in bekannter Weise eingebaut werden kann. Es besteht aus einem Gehäuse 2, in dem ein Abgaseinlass 4 und ein Abgasauslass 6 ausgebildet sind.

Zwischen dem Abgaseinlass 4 und dem Abgasauslass 6 ist ein zu regelnder Durchströmungsquerschnitt vorhanden, der von einem im Gehäuse 2 angeordneten Ventilsitz 8 umgeben ist, der mit einem Ventilschließkörper 10 zusammenwirkt. Der Ventilschließkörper 10 ist fest an einer Ventilstange 12 befestigt, welche in einer Führungsbuchse 14 translatorisch verschiebbar gleitend gelagert ist. Dabei wird die Ventilstange 12 verchromt ausgeführt, welche in der aus Edelstahl hergestellten Buchse 14 gleitet, die in einer entsprechend ausgeformten Durchgangsbohrung 16 mit einem Absatz 17 im Gehäuse 2 befestigt ist. Dieser Absatz 17 sichert die axiale Lage Führungsbuchse 14 in der Bohrung 16 gegen eine Bewegung der Führungsbuchse 14 in Richtung zum Ventilschließkörper 10.

Innerhalb dieser Durchgangsbohrung 16 an der zum Ventilschließkörper 10 entgegengesetzten Seite der Führungsbuchse 14 ist ein Lippendichtring 18 mit einem Stützring 20 angeordnet.

An der zum Ventilschließkörper 10 entgegengesetzten Ende der Ventilstange 12 ist direkt oder indirekt mit der Ventilstange 12 ein nicht dargestellter, insbesondere elektromotorischer Aktuator angeschlossen, über den die Ventilstange 12 translatorisch bewegbar ist.

Um die Ventilstange 12 herum an der Seite des Aktuators ist im Gehäuse 2 eine ringförmige Ausnehmung 22 ausgebildet, welche die Ventilstange 12 konzentrisch umgibt. Am Boden 24 dieser Ausnehmung 22 stützt sich eine Schraubenfeder 26 ab, die ebenfalls die Ventilstange 12 umgibt und deren entgegengesetztes Ende gegen einen Teller 28 anliegt, der axial unverschieblich zur Ventilstange 12 an der Ventilstange 12 befestigt ist. Die Schraubenfeder 26 befindet sich zwischen dem Boden 24 und dem Teller 28 in Vorspannung, so dass der Ventilschließkörper 10 durch die Federkraft gegen den Ventilsitz 8 belastet wird.

Erfindungsgemäß weist die Führungsbuchse 14 einen ersten zum Lippendichtring 18 gewandten Abschnitt 30 auf, dessen Innendurchmesser größer ist als der Außendurchmesser der Ventilstange 12, so dass zwischen der Ventilstange 12 und der Führungsbuchse 14 in diesem Abschnitt 30 ein konzentrischer ringförmiger Spalt 32 besteht. Die axiale Ausdehnung dieses Spaltes 32 ist zumindest so groß wie der Maximalhub des Ventilschließkörpers 10.

An diesen ersten Abschnitt 30 schließt sich ein zweiter Abschnitt an, der als Führungsabschnitt 34 dient und in dem die Ventilstange 12 gleitend gelagert ist. An diesen Abschnitt 34 schließt sich in diesem Ausführungsbeispiel erneut ein erweiterter Abschnitt 36 an, der an seinem zum Ventilschließkörper 10 weisenden Ende eine Einschnürung 38 aufweist, die einen zweiten ringförmigen konzentrisch zur Ventilstange 12 angeordneten zweiten Spalt 40 radial begrenzt.

Wird nun der Aktuator entgegen der Federkraft betätigt, wird die Ventilstange in Richtung zum Ventilschließkörper 10 gleitend in der Führungsbuchse 14 bewegt, so dass sich der Ventilschließkörper 10 vom Ventilsitz 8 abhebt. Hierdurch entsteht ein freier Durchströmungsquerschnitt, durch den Partikel belastetes Abgas vom Abgaseinlass 4 in Richtung zum Abgasauslass 6 strömen kann. Dies führt dazu, dass insbesondere aufgrund der vorhandenen Abgaspulsationen Zustände auftreten können, die ein Druckgefälle in Richtung zum Aktuator verursachen, so dass geringe Abgasmengen entlang der Ventilstange in Richtung zum Aktuator strömen. In diesem Abgas sind Verschmutzungen vorhanden, die sich an der Ventilstange 12 oder der Führungsbuchse 14 absetzen. Bei Bewegung des Ventils kann dies dazu führen, dass in dem Bereich der in einer beliebigen Stellung des Ventils im Führungsabschnitt gleitet aufgrund der notwendigen geringen Toleranzen Riefen entstehen. Diese können nun jedoch nicht mehr mit dem Lippendichtring 18 in Berührung kommen, da der mit dem Lippendichtring 18 in Berührung kommende Abschnitt der Ventilstange 12 in keiner Position im Führungsabschnitt 34 gleitet. Somit entstehen in diesem Abschnitt der Ventilstange auch keine Riefen, die zu einer Zerstörung des Lippendichtringes 18 führen könnten. Stattdessen ist im ersten Spalt 32 ausreichend Raum vorhanden, um die vorhandenen Verunreinigungen zu sammeln. Gleiches gilt für den Spalt 40. Auch besteht die Möglichkeit, dass die Verunreinigungen aus dem Führungsabschnitt 34 durch die Bewegung entfernt werden und in einem der Spalte 32, 40 verweilen.

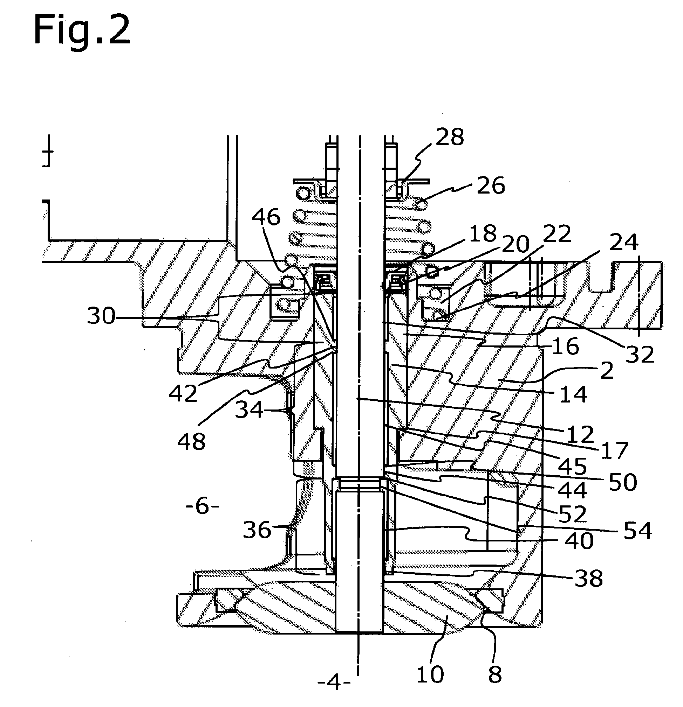

Das in Figur 2 dargestellte Abgasrückführventil bildet eine weiterführende Ausführung des ersten Ausführungsbeispiels, wobei für gleiche Bauteile gleiche Bezugszeichen verwendet werden.

Im Vergleich zum ersten Ausführungsbeispiel sind Änderungen an der Ventilstange 12 und der Führungsbuchse 14 vorgenommen worden. Im langen, zusammenhängenden Führungsbereich 34 bei der Ausführung gemäß Figur 1 kann sich insbesondere in der Mitte des Führungsbereichs 34 Ruß ansammeln, der nicht mehr heraus transportiert wird und letztendlich zur erhöhten Reibung führt. Daher ist der relativ lange Führungsabschnitt 34 des ersten Ausführungsbeispiels im Ausführungsbeispiel gemäß Figur 2 aufgeteilt in zwei Führungsbereiche 42, 44, die an den axialen Enden des Führungsabschnitts 34 angeordnet sind und die möglichst kurz ausgeführt sind, wobei zwischen den beiden Führungsbereichen 42, 44 ein relativ hierzu längerer Spalt 45 durch Erweiterung des Innendurchmessers der Führungsbuchse 14 ausgebildet ist. Dieser Abstand zwischen den beiden Führungsbereichen 42, 44 ist notwendig um ein Kippen der Ventilstange 12 zu verhindern. Durch die Reduzierung der Führung auf die zwei sich am weitesten gegenüberliegende Bereiche 42 und 44 bleibt die Führungsgeometrie mit der Stange erhalten. An ihren axialen Enden weisen die Führungsbereiche 42, 44 als Schabekanten dienende Kanten 46, 48, 50, 52 auf. Auf der Ventilstange 12 befindliche Verschmutzungen, werden an diesen Kanten 46, 48, 50, 52 bei Bewegung der Ventilstange 12 abgeschert und geraten somit zum großen Teil gar nicht in die Führungsbereiche 42, 44 sondern werden in den Spalten 32, 40, 45 gesammelt. Durch die beiden relativ zum Ventilhub viel kürzeren Führungsbereiche wird jetzt erreicht, dass jede Kontaktstelle der Ventilstange 12 zur Führung bei Vollhub den jeweiligen kurzen Führungsbereich 42, 44 mehr als komplett durchfährt und somit auch Partikel aus dem Kontaktbereich weitestgehend heraus transportiert werden können. Darüberhinaus wird durch die relativ hohe radiale Kraftkomponente in diesen Führungsbereichen 42, 44 bei Bewegung der Ventilstange 12 und dem unmittelbaren Kontakt beider Bauteile eine Partikelansammlung ebenfalls reduziert.

Der näher zum Ventilschließkörper 10 gelegene Führungsbereich 44 befindet sich im Innern des Abgas durchströmten Raumes. Im geschlossenen Zustand des Abgasrückführventils befindet sich unmittelbar angrenzend an diesen zweiten Führungsbereich 44 oder mit geringfügiger Überschneidung zum Führungsbereich 44 ein Einstich 54 an der Ventilstange 12. Auch dieser Einstich 54 dient zur Aufnahme von Verunreinigungen und führt zu Verwirbelungen, die ein gerades Einströmen in den Führungsbereich 44 erschweren.

Es wird deutlich, dass durch die beschriebenen Ausführungsbeispiele die Lebensdauer eines Abgasrückführventils erhöht werden kann, da die Bereiche mechanischer Belastung reduziert werden. Reibung wird zu großen Teilen vermieden, so dass die Dichtigkeit des Lippendichtringes erhalten bleibt und ein Verklemmen durch Reduzierung der Gleitbereiche weitestgehend verhindert wird.

Es sollte deutlich sein, dass der Schutzbereich der Ansprüche nicht auf die beschriebenen Ausführungsbeispiele begrenzt ist sondern verschiedene konstruktive Änderungen insbesondere bezüglich der Anzahl der Schabekanten oder der Größenabmessungen der Bauteile denkbar sind.

## Patentansprüche

1. Abgasrückführventil für eine Verbrennungskraftmaschine mit einem Gehäuse (2) mit einem Abgaseinlass (4) und einem Abgasauslass (6),
einem Ventilschließkörper (10),
einer Ventilstange (12), an der der Ventilschließkörper (10) befestigt ist und welche über einen Aktuator bewegbar ist,
einem Ventilsitz (8) zwischen dem Abgaseinlass (4) und dem Abgasauslass (6), auf den der Ventilschließkörper (10) durch Bewegung der Ventilstange (12) absenkbar ist und von dem der Ventilschließkörper (10) durch entgegengesetzte Bewegung abhebbar ist,
einer Führungsbuchse (14), über welche die Ventilstange (12) im Gehäuse (2) geführt ist
und einem Dichtring (18), welcher am zum Ventilschließkörper (10) entgegengesetzten Ende der Führungsbuchse (12) angeordnet ist,
**dadurch gekennzeichnet, dass**
in einem ersten Abschnitt (30) der Führungsbuchse (14), der zum Dichtring (18) weist, zwischen der Ventilstange (12) und der Führungsbuchse (14) ein umlaufender Spalt (32) ausgebildet ist, dessen Höhe größer oder gleich der maximalen Hubhöhe des Ventilschließkörpers (10) ist.

2. Abgasrückführventil für eine Verbrennungskraftmaschine nach Anspruch 1,
**dadurch gekennzeichnet, dass**
an den ersten Abschnitt (30) ein Führungsabschnitt (34) der Führungsbuchse (14) angrenzt, an dessen zum Ventilschließkörper (10) weisenden Ende eine scharfe Kante (52) ausgebildet ist.

3. Abgasrückführventil für eine Verbrennungskraftmaschine nach Anspruch 2,
**dadurch gekennzeichnet, dass**
an den Führungsabschnitt (34) in Richtung zum Ventilschließkörper (10) ein dritter Abschnitt (36) angrenzt, in dem ein zweiter Spalt (40) zwischen der Führungsbuchse (14) und der Ventilstange (12) ausgebildet ist, wobei am zum Ventilschließkörper (10) weisenden Ende die Führungsbuchse (14) eine Einschnürung (38) aufweist, durch die der zweite Spalt (40) reduziert wird.

4. Abgasrückführventil für eine Verbrennungskraftmaschine nach einem der Ansprüche 2 oder 3,
**dadurch gekennzeichnet, dass**
der Führungsabschnitt (34) an seinen axialen Enden zwei Führungsbereiche (42, 44) aufweist, zwischen denen ein weiterer Spalt (45) ausgebildet ist.

5. Abgasrückführventil für eine Verbrennungskraftmaschine nach Anspruch 4,
**dadurch gekennzeichnet, dass**
die axiale Höhe der beiden Führungsabschnitte (42, 44) kleiner oder gleich der maximalen Hubhöhe des Ventilschließkörpers (10) ist.

6. Abgasrückführventil für eine Verbrennungskraftmaschine nach einem der Ansprüche 4 oder 5,
**dadurch gekennzeichnet, dass**
die beiden Führungsbereiche (42, 44) an zumindest einem ihrer axialen Enden eine scharfe Kante (46, 48, 50, 52) aufweisen.

7. Abgasrückführventil für eine Verbrennungskraftmaschine nach einem der vorhergehenden Ansprüche,
**dadurch gekennzeichnet, dass**
an der Ventilstange (12) ein umlaufender Einstich (54) ausgebildet ist, der im geschlossenen Zustand des Abgasrückführventils unmittelbar an den Führungsabschnitt (34) angrenzt oder eine kurze Überschneidung mit dem Führungsabschnitt (34) aufweist.

## Claims

1. An exhaust gas recirculation valve for an internal combustion engine comprising
a housing (2) with an exhaust gas inlet (4) and an exhaust gas outlet (6),
a valve closing body (10),
a valve rod (12) to which the valve closing body (10) is fastened and which is movable via an actuator,
a valve seat (8) between the exhaust gas inlet (4) and the exhaust gas outlet (6), onto which the valve closing body (10) can be lowered by moving the valve rod (12), and from which the valve closing body (10) can be lifted by an oppositely directed movement,
a guide bushing (14) by which the valve rod (12) is guided in the housing (2),
and a sealing ring (18) arranged at the end of the guide bushing (14) remote from the valve closing body (10),
**characterized in that**
in a first section (30) of the guide bushing (14) directed toward the sealing ring (18), a circumferential gap (32) is formed between the valve rod (12) and the guide bushing (14), the height of the gap being greater or equal to the maximal stroke height of the valve closing body (10).

2. The exhaust gas recirculation valve for an internal combustion engine of claim 1, **characterized in that** the first section (30) is joined by a guiding section (34) of the guide bushing (14), whose end facing to the valve closing body (10) is formed with a sharp edge (52).

3. The exhaust gas recirculation valve for an internal combustion engine of claim 2, **characterized in that** a third section (36) adjoins the guiding section (34) in the direction of the valve closing body (10), in which section a second gap (40) is formed between the guide bushing (14) and the valve rod (12), wherein the guide bushing (14) has its end facing to the valve closing body (10) formed with a constriction (38) by which the second gap (40) is reduced.

4. The exhaust gas recirculation valve for an internal combustion engine of one of claims 2 or 3, **characterized in that** the guiding section (34) has its axial ends provided with two guiding portions (42, 44) between which a further gap (45) is formed.

5. The exhaust gas recirculation valve for an internal combustion engine of claim 4, **characterized in that** the axial height of the two guiding portions (42, 44) is smaller or equal to the maximum stroke height of the valve closing body (10).

6. The exhaust gas recirculation valve for an internal combustion engine of one of claims 4 or 5, **characterized in that** both guiding portions (42, 44) have a sharp edge (46, 48, 50, 52) at least at one of their axial ends.

7. The exhaust gas recirculation valve for an internal combustion engine of one of the preceding claims, **characterized in that** a circumferential recess (54) is formed in the valve rod (12), which in the closed state of the exhaust gas recirculation valve immediately adjoins the guiding section (34) or slightly overlaps the guiding section (34).

## Revendications

1. Soupape de recyclage de gaz d'échappement pour un moteur à combustion interne comprenant
un carter (2) avec une entrée de gaz d'échappement (4) et une sortie de gaz d'échappement (6),
un obturateur de soupape (10),
une tige de soupape (12), sur laquelle l'obturateur de soupape (10) est fixé, et qui peut être déplacée par un actuateur,
une siège de soupape (8) entre l'entrée de gaz d'échappement (4) et la sortie de gaz d'échappement (6), sur laquelle siège l'obturateur de soupape (10) peut être abaissé par mouvement de la tige de soupape (12) et de laquelle l'obturateur de soupape (10) peut être levé par mouvement opposé,
un manchon de guidage (14) guidant la tige de soupape (12) dans le carter (2),
et une bague d'étanchéité (18) disposée à l'extrémité du manchon de guidage (14) opposée à l'obturateur de soupape (10),
**caractérisée en ce que**
dans une première section (30) du manchon de guidage (14), dirigée vers la bague d'étanchéité (18), une fente (32) périphérique est formée entre la tige de soupape (12) et le manchon de guidage (14), dont l'hauteur est supérieure ou égale à la longueur de course maximale de l'obturateur de soupape (10).

2. Soupape de recyclage de gaz d'échappement pour un moteur à combustion interne selon la revendication 1, **caractérisée en ce qu'**une section de guidage (34) du manchon de guidage (14) jouxte la première section (30), une arête aigue (52) étant formée à l'extrémité de la section de guidage, qui est dirigée vers l'obturateur de soupape (10).

3. Soupape de recyclage de gaz d'échappement pour un moteur à combustion interne selon la revendication 2, **caractérisée en ce qu'**une troisième section (36) jouxte la section de guidage (34) dans la direction de l'obturateur de soupape (10), une deuxième fente (40) étant formée dans la troisième section entre le manchon de guidage (14) et la tige de soupape (12), le manchon de guidage (14) présentant une constriction (38) à l'extrémité dirigée vers l'obturateur de soupape (10), par laquelle la deuxième fente (40) est réduite.

4. Soupape de recyclage de gaz d'échappement pour un moteur à combustion interne selon l'une des revendications 2 ou 3, **caractérisée en ce que** la section de guidage (34) comprend deux parties de guidage (42, 44) à ses extrémités axiales, une autre fente (45) étant formée entre lesdites parties.

5. Soupape de recyclage de gaz d'échappement pour un moteur à combustion interne selon la revendication 4, **caractérisée en ce que** l'hauteur axiale des deux sections de guidage (42, 44) est inférieure ou égale à l'hauteur de course maximale dudit obturateur de soupape (10).

6. Soupape de recyclage de gaz d'échappement pour un moteur à combustion interne selon l'une des revendications 4 ou 5, **caractérisée en ce que** les deux parties de guidage (42, 44) présentent une arête aigue (46, 48, 50, 52) à au moins une de leurs extrémités axiales.

7. Soupape de recyclage de gaz d'échappement pour un moteur à combustion interne selon l'une quelconque des revendications précédentes, **caractérisée en ce qu'**une encoche (54) périphérique est formée dans la tige de soupape (12), l'encoche, dans l'état fermée de la soupape de recyclage de gaz d'échappement, directement jouxtant la section de guidage (34) ou présentant un chevauchement court avec ladite section de guidage (34).
